# FASCICULE DE BREVET EUROPEEN

(11) **EP 0 556 126 B1**
(45) Date de publication et mention de la délivrance du brevet: **17.01.1996**
(21) Numéro de dépôt: 93400353.4
(22) Date de dépôt: 11.02.1993
(51) Int. Cl.: B60S 1/34

(54) **Dispositif d'essuie-glace de véhicule automobile comportant des moyens pour faire varier la pression d'essuyage**
Scheibenwischanlage für ein Kraftfahrzeug mit einer Vorrichtung zum Regeln des Wischdrucks
Windscreen wiper device for motor vehicles with means for regulating the pressure of the wiper

(30) Priorité: 12.02.1992 FR 9201569
(43) Date de publication de la demande: 18.08.1993
(73) Titulaire: PAUL JOURNEE S.A., F-92700 Colombes (FR)
(72) Inventeur: Journee, Maurice, F-60240 Reilly (FR)
(74) Mandataire: Lemaire, Marc

(56) Documents cités:
- DE-A- 1 938 618
- GB-A- 2 180 442
- US-A- 2 784 438
- PATENT ABSTRACTS OF JAPAN vol. 10, no. 315 (M-529)(2371) 25 Octobre 1986 & JP-A-61 125 952 (NISSAN MOTOR) 13 Juin 1986

## Description

La présente invention concerne un dispositif d'essuie-glace, notamment de véhicule automobile.

L'invention concerne plus particulièrement un dispositif d'essuie-glace du type comportant au moins un bras d'essuie-glace, qui porte au moins un balai d'essuyage, par exemple par l'intermédiaire d'un porte-balai à étriers et qui est monté articulé, autour d'un axe d'articulation, sur une tête d'entraînement de l'essuie-glace qui est soumise à un mouvement de rotation alternatif par un arbre d'essuyage qui permet d'obtenir un balayage de la vitre à essuyer.

Le bras d'essuie-glace porte, par l'intermédiaire du porte-balai, un balai d'essuyage articulé qui est apte à essuyer la surface vitrée telle que par exemple un pare-brise de véhicule automobile.

Afin d'obtenir un essuyage correct de la surface vitrée, il est nécessaire que la lame d'essuyage de l'essuie-glace soit appliquée sur la surface vitrée à essuyer avec une force de pression, ou force d'essuyage importante.

A cet effet, il est généralement prévu au moins un ressort, tel que par exemple un ressort hélicoïdal de traction qui est disposé entre la tête d'entraînement et le reste du bras d'essuie-glace et qui applique en fait un couple nominal d'essuyage sensiblement constant au bras d'essuie-glace, autour de son axe d'articulation, de manière à venir plaquer la lame d'essuyage contre la vitre.

Du fait de la conception de ce dispositif, la lame est appuyée pendant le mouvement de balayage de la surface vitrée, mais également en position de repos du dispositif d'essuie-glace.

Du fait de la permanence de l'effort nominal d'essuyage qui est appliqué à la lame lorsque le dispositif d'essuie-glace est au repos, on constate que la lame conserve une forme résiduelle résultant de l'écrasement de son profil contre la surface vitrée, la lame ne procurant plus alors un essuyage suffisamment efficace de la surface vitrée.

Il est donc souhaitable de pouvoir réduire l'effort nominal d'essuyage appliqué à la lame lorsque l'essuie-glace est au repos.

Par ailleurs, la qualité d'essuyage de la surface vitrée dépend en fonctionnement de la maîtrise de l'effort d'essuyage qui est appliqué à la lame, et ceci notamment en fonction de la vitesse de déplacement du véhicule et en fonction de la fréquence du mouvement de balayage de l'essuie-glace.

Il est également connu d'augmenter la force d'essuyage au moyen d'appendices aérodynamiques montés sur le bras d'essuie-glace, mais ces dispositifs ne permettent pas de maîtriser avec précision la valeur de la force d'essuyage et ne permettent notamment pas de la faire varier de manière contrôlée en fonction d'un paramètre de fonctionnement du véhicule.

Afin de remédier aux inconvénients qui viennent d'être mentionnés, il a déjà été proposé un dispositif d'essuie-glace du type mentionné précédemment dans lequel les moyens agencés entre la tête d'entraînement et le bras d'essuie-glace pour appliquer à ce dernier un couple d'essuyage comportent au moins un ressort qui applique au bras d'essuie-glace un couple nominal d'essuyage sensiblement constant, et un dispositif pour appliquer au bras un couple complémentaire dont la valeur algébrique peut notamment être réglable de manière à pouvoir augmenter ou réduire la valeur du couple d'essuyage en fonction d'au moins un paramètre de fonctionnement du véhicule.

Le dispositif d'application du couple complémentaire comporte par exemple un actionneur associé à la tête d'entraînement et une tige de sortie de l'actionneur reliée au bras d'essuie-glace.

L'invention a pour but de proposer un dispositif d'essuie-glace perfectionné dont la conception permette notamment de maîtriser de manière précise la valeur algébrique du couple complémentaire appliqué au bras d'essuie-glace, tant en fonctionnement de l'essuie-glace que lorsque ce dernier est en position de repos.

Dans ce but, l'invention propose un dispositif d'essuie-glace du type mentionné précédemment, l'organe de sortie de l'actionneur étant relié au bras d'essuie-glace par une pièce de liaison qui se déplace selon une direction perpendiculaire à l'axe d'articulation du bras d'essuie-glace et qui comporte une surface active selon les enseignements du document GB-A-2 180 442, caractérisé en ce que ladite surface active coopère avec un galet d'application du couple complémentaire monté tournant autour d'un axe fixé sur le bras d'essuie-glace parallèle à l'axe d'articulation.

Selon des modes de réalisation de l'invention :
- la pièce de liaison comporte deux branches et présente une forme générale de L, le galet étant susceptible de coopérer avec les faces internes des deux branches de la pièce de liaison ;
- une première branche de la pièce de liaison s'étend selon la direction de déplacement de la pièce de liaison ;
- la face interne de la seconde branche de la pièce de liaison est une portion de surface plane perpendiculaire à la direction de déplacement ;
- la face interne de la première branche de la pièce de liaison comporte une rampe inclinée par rapport à la direction de déplacement ;
- la face externe de la première branche de la pièce de liaison est parallèle à la direction de déplacement et coopère avec un disque d'appui monté tournant autour d'un axe de rotation perpendiculaire à la direction de déplacement ;
- l'arc de cercle géométrique sur lequel est situé l'axe de rotation du galet intercepte la ligne droite passant par l'axe d'articulation et par l'axe de rotation du disque d'appui en un point situé entre ces deux axes ;
- la surface cylindrique externe du galet 44 est réalisée dans un matériau déformable élastiquement ;
- la face interne de la seconde branche de la pièce de liaison est tournée vers l'actionneur ;
- l'actionneur est un moteur linéaire qui comporte une tige de sortie coulissant axialement et à l'extrémité de laquelle est reliée la pièce de liaison ; et
- la pièce de liaison est articulée sur la tige autour d'un axe perpendiculaire à la direction de déplacement.

D'autres caractéristiques et avantages de l'invention apparaîtront au cours de la lecture de la description détaillée qui va suivre pour la compréhension de laquelle on se reportera aux dessins annexés dans lesquels :
- La figure 1 est une vue schématique en coupe transversale partielle d'un dispositif d'essuie-glace réalisé conformément aux enseignements de l'invention ;
- la figure 2 est une vue de dessus avec arrachement partiel du dispositif illustré à la figure 1 ; et
- les figures 3 à 8 sont des vues à plus grande échelle, similaires à celles de la figure 1, qui illustrent différentes posi-tions relatives des composants de l'essuie-glace correspondant notamment à différentes phases de fonctionnement de celui-ci.

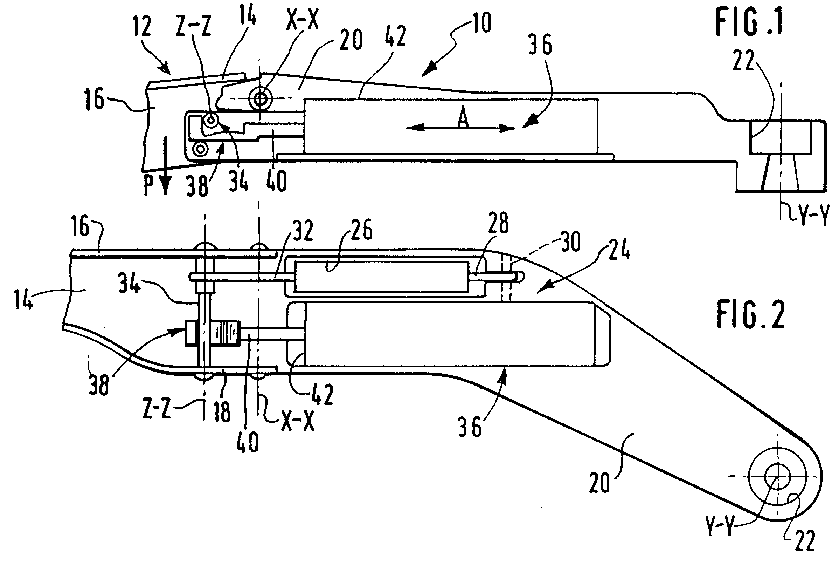

Le dispositif d'essuie-glace 10 illustré aux figures 1 et 2 comporte un bras d'essuie-glace 12 formant porte-balai dont la portion illustrée sur les figures se présente sous la forme d'un profilé creux en U inversé constitué par un dos 14 et par deux flancs ou joues latérales perpendiculaires 16 et 18.

Le bras d'essuie-glace 12 est articulé sur une tête d'entraînement 20 autour d'un axe géométrique X-X qui s'étend selon une direction sensiblement perpendiculaire à la direction générale du bras d'essuie-glace.

La tête d'entraînement 20 comporte, à son extrémité opposée à l'axe d'articulation X-X, un alésage 22 d'axe Y-Y sensiblement perpendiculaire à l'axe d'articulation et qui est prévu pour recevoir un arbre d'essuyage (non représenté) qui permet d'entraîner en rotation la tête d'entraînement 20 en un mouvement alternatif par tout moyen tel qu'un moteur d'essuyage (non représenté).

Selon une technique connue, le dispositif d'essuie-glace 10 comporte des moyens 24 qui permettent d'appliquer au bras d'essuyage 12 un effort ou pression d'essuyage P de valeur sensiblement constante et orienté en direction de la surface à essuyer (non représentée).

Le dispositif 24 est ici constitué par un ressort hélicoïdal de traction 26 dont une extrémité 28 est accrochée sur une tige transversale 30 de la tête d'entraînement 20 et dont l'autre extrémité 32 est accrochée sur une tige transversale 34 du bras d'essuie-glace dont l'axe géométrique Z-Z est parallèle à l'axe d'articulation X-X.

Comme on peut le voir à la figure 1, l'axe Z-Z est situé en-dessous de l'axe X-X, c'est-à-dire entre ce dernier et la surface à essuyer, de manière que le ressort 26 applique un couple nominal au balai 12 autour de son axe X-X dont il résulte une pression d'essuyage P appliquée à la lame d'essuyage.

Le dispositif d'essuie-glace 10 comporte également des moyens pour appliquer au bras d'essuie-glace 12 un couple complémentaire qui permet de faire varier la valeur de la pression d'essuyage P.

Ces moyens sont pour l'essentiel constitués par un actionneur 36 agencé dans la tête d'entraînement 20 et par une pièce de liaison 38 qui relie la tige de sortie 40 de l'actionneur 36 au bras d'essuie-glace 12.

Dans le mode de réalisation illustré aux figures, l'actionneur 36 est du type linéaire et sa direction générale d'actionnement A s'étend selon une direction sensiblement perpendiculaire à l'axe d'articulation X-X du bras 12 sur la tête d'entraînement 20.

La tige 40 de l'actionneur 36 fait saillie, parallèlement à la direction A, à l'extérieur du corps 42 de l'actionneur 36.

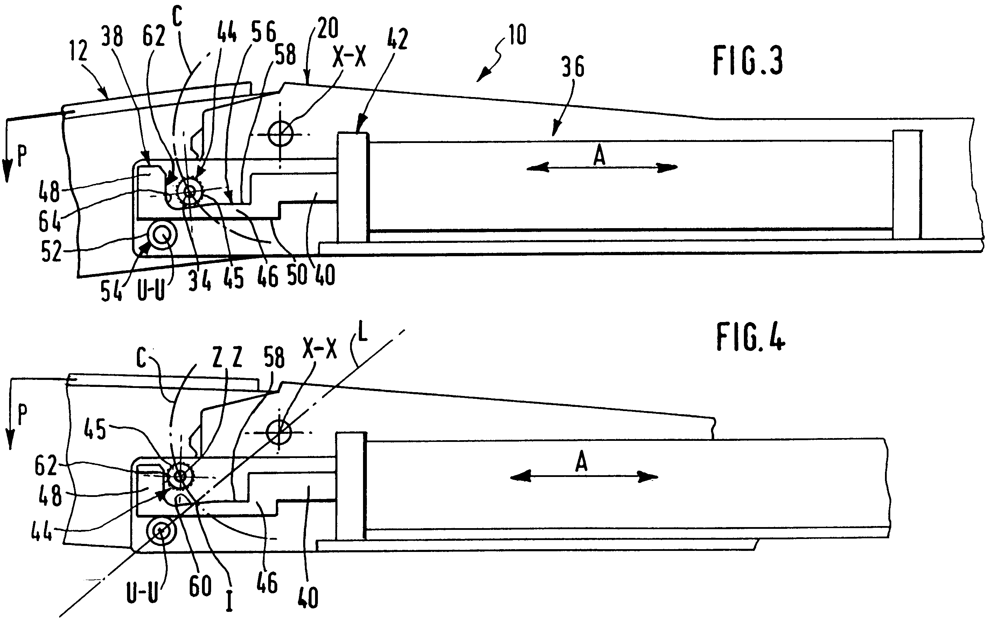

Conformément à l'invention, et comme on peut le voir notamment aux figures 3 à 8, la pièce 38 coopère avec un galet 44 monté tournant autour de la tige 34.

Le corps du galet 44 est par exemple réalisé en matériau déformable élastiquement et il est prévu pour coopérer avec des surfaces actives de la pièce de liaison 38 qui seront décrites en détail par la suite.

La pièce de liaison 38 présente une forme générale de L et est constituée par une première branche 46 et par une seconde branche sensiblement perpendiculaire 48.

La première branche 46 s'étend selon une direction parallèle à la direction d'actionnement A et donc selon une direction perpendiculaire à l'axe d'articulation X-X.

La première branche 46 comporte une surface externe plane 50 qui s'étend parallèlement à la direction d'actionnement A et qui est guidée dans ses déplacements en appui sur la surface cylindrique externe 52 d'un disque d'appui 54 qui est monté à rotation autour d'un axe fixe U-U de la tête d'entraînement.

La face interne 56 de la première branche 46 constitue une première portion de surface active avec laquelle est susceptible de coopérer le galet 44 d'application du couple complémentaire.

La surface interne 56 comporte une première partie 58 parallèle à la face externe 50 et une seconde partie 60 formant une rampe inclinée comme on peut le voir notamment à la figure 4.

L'inclinaison de la rampe 60 est telle que l'épaisseur de la première branche 46 va en s'amincissant depuis l'actionneur vers la seconde branche 48.

La face interne 62 de la seconde branche 48 est tournée vers l'actionneur 36 et est une portion de surface plane qui s'étend dans un plan perpendiculaire à la direction de l'actionnement A et parallèle à l'axe d'articulation X-X.

Cette seconde portion de surface active 62 est reliée à la première portion 56 par une portion de surface incurvée 64 dont le rayon correspond sensiblement au rayon extérieur du galet 44.

Lorsque le bras d'essuie-glace pivote autour de son axe d'articulation X-X, l'axe de rotation Z-Z du galet 44 se déplace sur un arc de cercle C.

La ligne droite L passant par l'axe d'articulation X-X et par l'axe de rotation U-U du disque d'appui 52 intercepte l'arc de cercle C en un point I qui est toujours situé entre ces deux axes géométriques.

On décrira maintenant le mode de fonctionnement du dispositif d'application du couple complémentaire qui vient d'être décrit, en se référant aux figures 3 à 8.

La position illustrée à la figure 3 est la position normale de fonctionnement du dispositif d'essuie-glace 10 en cours d'essuyage d'un pare-brise.

Dans cette position, la valeur de la pression d'essuyage P dépend des caractéristiques du ressort 26 et correspond donc sensiblement à la pression nominale d'essuyage.

En effet, la surface externe 45 du galet 44 n'est pas en contact avec la seconde portion de surface active 62 et est simplement en contact avec la partie médiane de la rampe 60 sans provoquer d'application d'un couple complémentaire au balai d'essuie-glace 12.

Lors du balayage du pare-brise, et en fonction du galbe de celui-ci, le balai d'essuie-glace 12 peut pivoter autour de l'axe X-X pour atteindre par exemple la position illustrée à la figure 4 dans laquelle la valeur de la pression d'essuyage P n'a pas varié. En effet, on constate que la surface extérieure 45 du galet 44 s'est éloignée de la rampe 60 et n'est toujours pas en contact avec la portion de surface active 62.

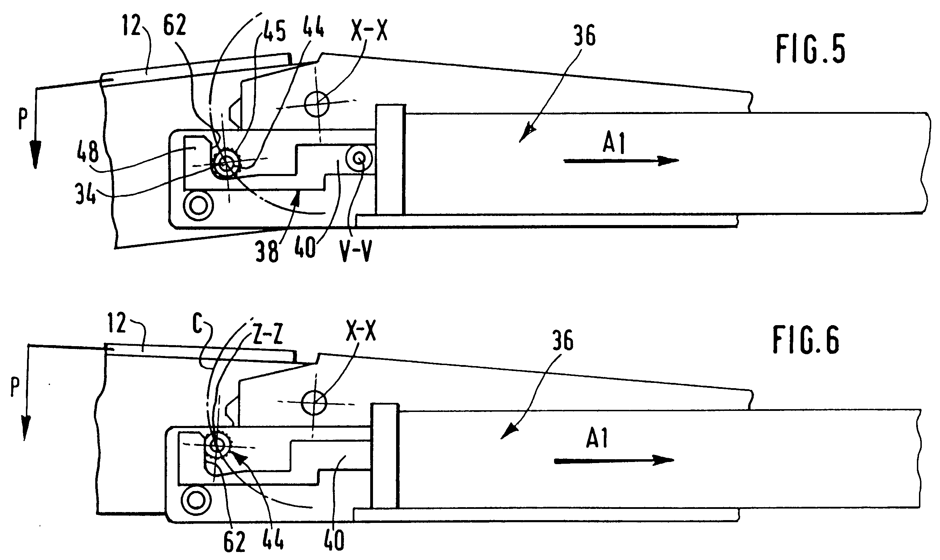

Dans la position illustrée à la figure 5, on a provoqué un déplacement de la tige 40 selon le sens d'actionnement A1 de manière à amener la portion de surface active 62 en contact avec la surface 45 du galet 44 pour exercer sur ce dernier, et donc sur la tige 34 un effort supplémentaire qui se traduit par un accroissement du couple d'essuyage et donc de la pression d'essuyage P.

Si le bras d'essuie-glace 12 pivote autour de son axe d'articulation X-X dans le sens horaire en considérant la figure 5, et du fait du déplacement de l'axe de rotation Z-Z sur l'arc de cercle C, il se produit un accroissement supplémentaire du couple complémentaire appliqué par l'actionneur 36.

On constate ainsi que la coopération du galet 44 avec la portion de surface active 62 de la seconde branche 48 permet d'appliquer un couple complémentaire du bras d'essuie-glace 12 dont la valeur augmente lorsque le bras d'essuie-glace 12 oscille autour de l'axe X-X pour passer de la position d'essuyage basse illustrée à la figure 5 à une position d'essuyage haute illustrée à la figure 6.

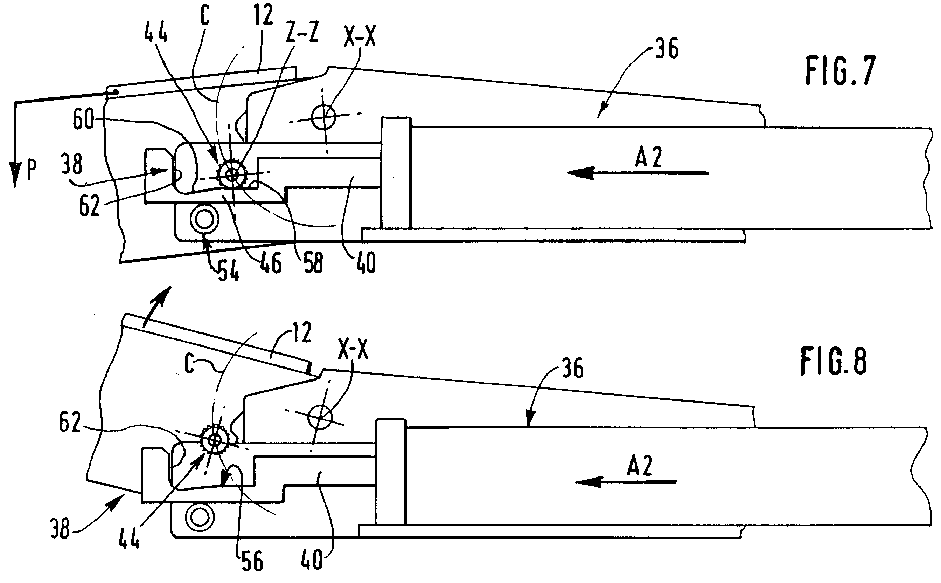

On a représenté à la figure 7 le dispositif d'essuie-glace dans sa position de repos également appelée position de parc.

Dans cette position, on a provoqué le déplacement de la tige 40 de l'actionneur 36 selon le sens A2, c'est-à-dire de la droite vers la gauche en considérant la figure.

Ce déplacement a provoqué la coopération du galet 44 avec la rampe 60 pour l'amener en contact avec la première partie 58 de la surface active 56.

Ce déplacement du galet par rapport à la pièce 38 dont la première branche 46 prend appui sur le disque de réaction 54, provoque l'application au bras d'essuie-glace 12 d'un couple complémentaire dont la valeur vient se soustraire à celle du couple nominal de manière à réduire de façon importante la valeur de la pression d'essuyage P, par exemple de moitié par rapport à la valeur nominale.

En partant de la position de repos illustrée à la figure 7, et notamment si on désire intervenir sur le balai d'essuie-glace 12 en vue de son entretien, il est possible de provoquer son pivotement dans le sens horaire autour de l'axe d'articulation X-X pour atteindre la position illustrée à la figure 8.

Du fait de la conception en forme de L de la pièce de liaison 38, rien ne s'oppose à ce pivotement du bras d'essuie-glace 12 d'un angle très important autour de l'axe X-X.

A la fin de l'opération d'entretien, l'utilisateur ramène le bras d'essuie-glace 12 dans sa position illustrée à la figure 7 dans laquelle il est sollicité élastiquement par le ressort 26.

La conception du dispositif qui vient d'être mentionnée permet donc de faire varier la valeur de la pression d'essuyage en fonction notamment des paramètres de fonctionnement du véhicule automobile.

Quelle que soit la position axiale de la tige 40 par rapport au corps de l'actionneur 36, et en cas de panne de ce dernier, l'essuie-glace conserve une capacité minimale de fonctionnement et donc d'essuyage de la surface vitrée avec, dans l'hypothèse la plus défavorable, une pression d'essuyage au moins égale à la valeur résiduelle de cette pression en position de parking (figure 7).

Le fait que le corps du galet 44 soit réalisé en matériau déformable élastiquement permet également d'éviter que les variations d'effort auxquelles est soumis le bras 12 et qui résultent du balayage d'une surface galbée ne soient transmises à la tige 40 et à l'actionneur 36.

Selon une variante illustrée à la figure 5, il est également possible de prévoir que la pièce de liaison 38 est fixée sur la tige 40 de manière articulée autour d'un axe V-V perpendiculaire à la direction de déplacement A-A et ceci afin d'éviter également d'appliquer à la tige 40 des efforts la sollicitant transversalement de manière trop importante.

Sans sortir du cadre de la présente invention, il est possible de prévoir de nombreuses variantes du dispositif qui vient d'être décrit en détail.

La conformation des portions de surfaces actives avec lesquelles coopère le galet 44 peut notamment varier de manière très importante dans la mesure où leur dessin peut notamment être réalisé sous la forme d'une came dont le profil détermine la valeur de l'effort complémentaire appliqué au bras d'essuie-glace 12 et les variations de cette valeur en fonction des positions relatives des composants.

## Revendications

1. Dispositif d'essuie-glace (10), notamment de véhicule automobile, du type comportant un bras d'essuie-glace (12) qui porte au moins un balai d'essuyage et qui est monté articulé autour d'un axe d'articulation (X-X), sur une tête d'entraînement (20) du bras d'essuie-glace (12), et des moyens (24, 36) agencés entre la tête d'entraînement (20) et le bras d'essuie-glace (12) pour appliquer à ce dernier un couple d'essuyage et qui comportent au moins un ressort (26) qui applique au bras d'essuie-glace (12) un couple nominal d'essuyage sensiblement constant et un dispositif d'application d'un couple complémentaire comportant un actionneur (36) dont le corps (42) est associé à la tête d'entraînement (20) et dont l'organe de sortie (40) est relié au bras d'essuie-glace (12), l'organe de sortie (40) de l'actionneur (36) étant relié au bras d'essuie-glace (12) par une pièce de liaison (38) qui se déplace selon une direction (A) perpendiculaire à l'axe d'articulation (X-X) et qui comporte une surface active (56, 62), caractérisé en ce que ladite surface active (56,62) coopère avec un galet (44) d'application du couple complémentaire monté tournant autour d'un axe (34, Z-Z) fixé sur le bras d'essuie-glace (12) parallèle à l'axe d'articulation (X-X).

2. Dispositif d'essuie-glace selon la revendication 1, caractérisé en ce que la pièce de liaison (38) comporte deux branches (46, 48) et présente une forme de L, et en ce que le galet (44) est susceptible de coopérer avec les faces internes (56, 62) des deux branches (46, 48) de la pièce de liaison (38).

3. Dispositif d'essuie-glace selon la revendication 2, caractérisé en ce qu'une première branche (46) de la pièce de liaison (38) s'étend selon ladite direction de déplacement (A).

4. Dispositif d'essuie-glace selon la revendication 3, caractérisé en ce que la face interne (62) de la seconde branche (48) de la pièce de liaison (38) est une portion de surface plane perpendiculaire à la direction de déplacement (A).

5. Dispositif d'essuie-glace selon l'une des revendications 3 ou 4, caractérisé en ce que la face interne (56) de la première branche (46) de la pièce de liaison (38) comporte une rampe (60) inclinée par rapport à la direction de déplacement (A).

6. Dispositif d'essuie-glace selon la revendication 5, caractérisé en ce que la face externe (50) de la première branche (46) de la pièce de liaison (38) est parallèle à la direction de déplacement (A) et coopère avec un disque d'appui (54) monté tournant autour d'un axe de rotation (U-U) perpendiculaire à la direction de déplacement (A).

7. Dispositif d'essuie-glace selon la revendication 6, caractérisé en ce que l'arc de cercle géométrique (C) sur lequel est situé l'axe de rotation (Z-Z) du galet (44) intercepte la ligne droite (L) passant par l'axe d'articulation (X-X) et l'axe de rotation (U-U) du disque d'appui (54) en un point (I) situé entre ces deux axes.

8. Dispositif d'essuie-glace selon l'une quelconque des revendications précédentes, caractérisé en ce que la surface cylindrique externe du galet (44) est réalisée dans un matériau déformable élastiquement.

9. Dispositif d'essuie-glace selon l'une quelconque des revendications 2 à 8, caractérisé en ce que la face interne (62) de la seconde branche (48) de la pièce de liaison (38) est tournée vers l'actionneur (36).

10. Dispositif d'essuie-glace selon l'une quelconque des revendications précédentes, caractérisé en ce que l'actionneur est un moteur linéaire (36) qui comporte une tige de sortie (40) coulissant axialement et à l'extrémité de laquelle est reliée la pièce de liaison (38).

11. Dispositif d'essuie-glace selon la revendication 10, caractérisé en ce que la pièce de liaison est articulée sur la tige (40) autour d'un axe (V-V) perpendiculaire à la direction de déplacement (A).

## Claims

1. Screen wiping apparatus (10), in particular for a motor vehicle, of the type comprising a screen wiper arm (12) which carries at least one wiper blade and which is articulated, about a pivot axis (X-X), on a drive head (20) of the screen wiper arm (12), and means (24, 36) which are arranged between the drive head (20) and the screen wiper arm (12) for applying a wiping torque to the latter, and which comprise at least one spring (26) which applies to the screen wiper arm (12) a substantially constant nominal wiping torque, together with a complementary torque-applying device which comprises an actuator (36), the body (42) of which is associated with the drive head (20), and the output member (40) of which is coupled to the wiper arm (12), the output member (40) of the actuator (36) being coupled to the screen wiper arm (12) by means of a coupling member (38) which is displaced in a direction (A) at right angles to the pivot axis (X-X), and which has a working surface (56, 62), characterised in that the said working surface (56, 62) cooperates with a roller (44) for applying the complementary torque, which is rotatably mounted about an axis (34, Z-Z) fixed on the screen wiper arm (12) parallel to the pivot axis (X-X).

2. Screen wiping apparatus according to Claim 1, characterised in that the coupling member (38) comprises two branches (46, 48) and is L-shaped, and in that the roller (44) is arranged to cooperate with the inner faces (56, 62) of the two branches (46, 48) of the coupling member (38).

3. Screen wiping apparatus according to Claim 2, characterised in that a first branch (46) of the coupling member (38) extends in the said direction (A) of displacement.

4. Screen wiping apparatus according to Claim 3, characterised in that the inner face (62) of the second branch (48) of the coupling member (38) is a flat surface portion at right angles to the direction (A) of displacement.

5. Screen wiping apparatus according to Claim 3 or Claim 4, characterised in that the inner face (56) of the first branch (46) of the coupling member (38) comprises a ramp (60) which is inclined with respect to the direction (A) of displacement.

6. Screen wiping apparatus according to Claim 5, characterised in that the outer face (50) of the first branch (46) of the coupling member (38) is parallel to the direction (A) of displacement, and cooperates with an application disc (54) which is rotatably mounted about an axis of rotation (U-U) at right angles to the direction (A) of displacement.

7. Screen wiping apparatus according to Claim 6, characterised in that the geometric arc of a circle (C) on which the axis of rotation (Z-Z) of the roller (44) lies, intercepts the straight line (L) which passes through the pivot axis (X-X) and the axis of rotation (U-U) of the application disc (54) at a point (I) lying between these two axes.

8. Screen wiping apparatus according to any one of the preceding Claims, characterised in that the outer cylindrical surface of the roller (44) is made of a resiliently deformable material.

9. Screen wiping apparatus according to any one of Claims 2 to 8, characterised in that the inner face (62) of the second branch (48) of the coupling member (38) is directed towards the actuator (36).

10. Screen wiping apparatus according to any one of the preceding Claims, characterised in that the actuator is a linear motor (36) which includes an output ram (40) sliding axially and having the coupling member (38) connected to its end.

11. Screen wiping apparatus according to Claim 10, characterised in that the coupling member is articulated on the ram (40) about an axis (V-V) at right angles to the direction (A) of displacement.

## Patentansprüche

1. Scheibenwischvorrichtung (10), insbesondere für Kraftfahrzeuge, der Bauart mit einem Wischerarm (12), der wenigstens ein Wischerblatt trägt das um eine Anlenkachse (X-X) auf einem Mitnehmerkopf (20) des Wischerblattes (12) angelenkt ist, und mit Mitteln (24, 36), die zwischen dem Mitnehmerkopf (20) und dem Wischarm (12) vorgesehen sind, um auf den letzteren ein Drehmoment zum Wischen auszuüben, und die wenigstens eine Feder (26), die auf den Wischerarm (12) ein Nenndrehmoment zum Wischen ausübt, das im wesentlichen konstant ist und eine Vorrichtung zur Ausübung eines ergänzenden Drehmoments umfassen, die eine Antriebsvorrichtung (36) aufweist, dessen Körper (42) mit dem Mitnehmerkopf 20) vebunden ist und dessen Austrittsteil (40) mit dem Wischerarm (12) verbunden ist, wobei das Austrittsteil (40) der Antriebsvorrichtung (36) mit dem Wischerarm (12) über ein Verbindungsteil (38) verbunden ist, das sich in eine Richtung (A) bewegt, die senkrecht zur Anlenkachse (X-X) verläuft und das eine aktive Oberfläche 56, 62) umfaßt, **dadurch gekennzeichnet**, daß die aktive Oberfläche (56, 62) mit einer Rolle (44) zur Übertragung des ergänzenden Drehmoments zusammenwirkt, die drehbar um eine Achse (34, Z-Z) montiert ist, die auf dem Wischerarm (12) parallel zur Anlenkachse (X-X) angebracht ist.

2. Scheibenwischvorrichtung nach Anspruch 1, **dadurch gekennzeichnet**, daß das Verbindungsteil (38) zwei Zweige (46, 48) umfaßt und L-förmig ist und daß die Rolle (44) dazu geeignet ist, mit den Innenseiten (56, 62) der beiden Zweige (46, 48) des Verbindungsteils (38) zusammenzuwirken.

3. Scheibenwischvorrichtung nach Anspruch 2, **dadurch gekennzeichnet**, daß ein erster Zweig (46) des Verbindungsteils (38) sich in Richtung der Bewegungsrichtung (A) bewegt.

4. Scheibenwischvorrichtung nach Anspruch 3, **dadurch gekennzeichnet**, daß die Innenseite (62) des zweiten Zweigs (48) des Verbindungsteils (38) einen Abschnitt mit ebener Fläche darstellt, der senkrecht zur Bewegungsrichtung (A) verläuft.

5. Scheibenwischvorrichtung nach einem der Ansprüche 3 oder 4, **dadurch gekennzeichnet**, daß die Innenseite (56) des ersten Zweigs (46) des Verbindungsteils (38) eine in bezug zur Bewegungsrichtung (A) geneigte Rampe aufweist.

6. Scheibenwischvorrichtung nach Anspruch 5, **dadurch gekennzeichnet**, daß die Außenseite (50) des ersten Zweigs (46) des Verbindungsteils (38) parallel zur Bewegungsrichtung (A) ist und mit einer Stützscheibe (54) zusammenwirkt, die drehfest mit einer Rotationsachse (U-U) verbunden ist, die senkrecht zur Bewegungsrichtung (A) ist.

7. Scheibenwischvorrichtung nach Anspruch 6, **dadurch gekennzeichnet**, daß der geometrische Kreisbogen (C), auf dem sich die Rotationsachse (Z-Z) der Rolle (44) befindet, die gerade Linie (L), die durch die Anlenkachse (X-X) und die Rotationsachse (U-U) der Stützscheibe (54) verläuft, in einem Punkt (I) schneidet, der sich zwischen diesen beiden Achsen befindet.

8. Scheibenwischvorrichtung nach einem der vorhergehenden Ansprüche, **dadurch gekennzeichnet**, daß die zylindrische Außenseite der Rolle (44) aus einem elastisch verformbaren Material gefertigt ist.

9. Scheibenwischvorrichtung nach einem der Ansprüche 2 bis 8, **dadurch gekennzeichnet**, daß die Innenseite (62) des zweiten Zweigs (48) des Verbindungsteils (38) auf die Antriebsvorrichtung (36) gerichtet ist.

10. Scheibenwischvorrichtung nach einen der vorhergehenden Ansprüche, **dadurch gekennzeichnet**, daß die Antriebsvorrichtung ein Linearmotor (36) ist, der einen Austrittsstift (40) aufweist, der sich axial verschiebt und mit dessen Ende das Verbindungsteil (38) verbunden ist.

11. Scheibenwischvorrichtung nach Anspruch 10, **dadurch gekennzeichnet**, daß das Verbindungsteil auf dem Stift (40) um eine Achse (V-V), die senkrecht zur Bewegungsrichtung (A) verläuft, angelenkt ist.
